Europäisches Patentamt

European Patent Office

Office européen des brevets

(11) Veröffentlichungsnummer : **0 410 983 B1**

(12) **EUROPÄISCHE PATENTSCHRIFT**

(45) Veröffentlichungstag der Patentschrift :
01.07.92 Patentblatt 92/27

(51) Int. Cl.$^5$ : **A61C 5/02**

(21) Anmeldenummer : **89904003.4**

(22) Anmeldetag : **12.04.89**

(86) Internationale Anmeldenummer :
**PCT/DE89/00217**

(87) Internationale Veröffentlichungsnummer :
**WO 89/10097 02.11.89 Gazette 89/26**

(54) **MESSGRIFF ZUR BEHANDLUNG VON ZAHNWURZELKANÄLEN.**

(30) Priorität : **21.04.88 DE 3813474**

(43) Veröffentlichungstag der Anmeldung :
**06.02.91 Patentblatt 91/06**

(45) Bekanntmachung des Hinweises auf die
Patenterteilung :
**01.07.92 Patentblatt 92/27**

(84) Benannte Vertragsstaaten :
**CH FR LI SE**

(56) Entgegenhaltungen :
**DE-B- 1 280 469**
**DE-C- 929 867**

(73) Patentinhaber : **Vereinigte Dentalwerke**
**Antaeos-Beutelrock-Zipperer Zdarsky Ehrler**
**GmbH & Co. KG**
**Steinerstrasse 6**
**W-8000 München 70 (DE)**

(72) Erfinder : **ZDARSKY, Eduard**
**Sun and Surf 100 Sunrise Av., Apt. 312**
**Palm Beach, FL 33480 (US)**

(74) Vertreter : **Hain, Leonhard et al**
**WILHELMS, KILIAN & PARTNER**
**Patentanwälte Eduard-Schmid-Strasse 2**
**W-8000 München 90 (DE)**

## Beschreibung

Die Erfindung betrifft einen Meßgriff zur Behandlung von Zahnwurzelkanälen gemäß dem Oberbegriff des Patentanspruches 1.

Bei Zahnwurzelkanal-Instrumenten, wie Bohrern, Feilen, Sonden usw., ist es bekannt, diese in einem Handgriff auf ein bestimmtes Tiefenmaß einzustellen. Dabei kann der Handgriff auch eine Meßskala aufweisen. So ist es bei einem Meßgriff dieser Art bekannt (DE-AS 1 280 469), den Instrumentenschaft im Handgriff nur längsverschiebbar zu führen, wozu das Schaftende zu einem Führungshaken umgebogen ist, der in einem Längsschlitz des Handgriffes geführt ist. Die Verschiebebewegung des Instrumentes wird von einer in einem Zylinderhohlraum des Handgriffes drehbar gelagerten Schraubenwendel bewirkt. Zur Verdrehung dieser Schraubenwendel ist am freien Griffende eine Drehscheibe vorgesehen, die zur Einstellung eines Tiefenmaßes des Instrumentes nur entsprechend gedreht werden muß, um das Instrument im Handgriff entweder zurück- oder vorzuschieben. Da die Ganghöhe der Schraubenwendel für eine Selbsthemmung ausgelegt ist, wird das Instrument in jeder Stellung auch fixiert. Die Schraubenwendel ist ferner so ausgebildet, daß ihre Windungen den Instrumentenschaft und die übereinanderliegenden Wendelgänge den Hakenteil satt umschließen, so daß das Instrument auch wackelfrei geführt wird. Um die Wendel zu drehen, greift das obere Wendelende in die Drehscheibe ein, die in einer Nut des Handgriffgehäuses gelagert ist. Auch diese Drehscheibe ist mit einem Schlitz versehen, durch den das Instrument in den Handgriff eingesetzt oder daraus entnommen werden kann. Bei diesem bekannten Meßgriff besteht der Handgriff aus Metall, wodurch sich nicht nur höhere Entstehungskosten ergeben, sondern auch die Oberflächengestaltung des Handgriffes beschränkt ist. Um diesen Handgriff sicher erfasen zu können, sind eigene Rändelringe aufgezogen, die ihn mit den bloßen Fingern einigermaßen sicher führen lassen. Diese bekannten Maßnahmen reichen aber nicht aus, wenn der Meßgriff mit Handschuben gehandhabt werden soll.

Der Erfindung liegt daher die Aufgabe zugrunde, einen Meßgriff zur Behandlung von Zahnwurzelkanälen der eingangs genannten Art so zu verbessern, daß sein Handgriff auch mit Handschuten ausreichend sicher führbar und auch die Instrumenteneinstellung mit Handschuhen ausführbar ist.

Diese Aufgabe wird an einem Meßgriff gemäß dem Oberbegriff des Patentanspruches 1 erfindungsgemäß durch die kennzeichnenden Merkmale dieses Patentanspruches gelöst.

Vorteilhafte Weiterentwicklungen der Erfindung sind in Unteransprüchen beansprucht.

Ein Greifwulst an einem Handgriffende bietet einen sicheren Halt für eine einen Handschuh tragende Hand auch dann, wenn der Handgriff mit Wasser oder Speichelflüssigkeit benetzt ist. Vor allem an beiden Handgriffenden ausgebildete Greifwulste lassen den Handgriff und damit das eingespannte Instrument sicher auf und ab führen, weil die Greifwulste gegenüber dem Handgriffmittelteil merkliche Verdickungen schaffen. In einem solchen Greifwulst läßt sich auch ein Drehgriff mit seinem Drehkörper in vorteilhafter Weise unterbringen. Dabei kann auch die im Handgriff notwendige Längsschlitz-Verlängerung durch den Drehgriff nach außen abgedeckt bleiben und so verhindert werden, daß das Führungshakenende beim Einsetzen oder Entnehmen des Instrumentes von der Hand in diesem Bereich blockiert wird. Besteht der Handgriff aus einem formbaren Kunststoff, dann läßt er sich in dieser vorteilhaften Form besonders präzise mit geringem Aufwand herstellen und zudem mit einer griffsicheren Oberfläche ausstatten.

Mit einem exakt gelagerten Drehknopf wird eine verbesserte Längsverstellung des Instruments erreicht, wobei der konisch geformte und längsgeriffelte Drehknopf die Justierung des Instrumentes auch ohne Schwierigkeit mit Handschuben ermöglicht.

Ein Kunststoffgriff läßt sich auch in einfacher Weise mit einer Mehrfach-Kodierung zur Arbeitserleichterung für den Zahnarzt versehen. So kann eine Meßskala, auch in Form einer Punktkodierung, angebracht sein. Ist der Drehknopf andersfarbig hergestellt, so läßt sich dadurch wiederum die Zugehörigkeit zu einem vorbestimmten Arbeitsplatz erkennbar machen.

Wird der nach außen offene Längsschlitz so beschaffen, daß er auch mit Handschuben fühlbar ist, dann wird damit gleichzeitig eine wichtige Orientierungshilfe für bestimmte Behandlungsfälle, wie beispielsweise für gekrümmte Wurzelkanäle, geschaffen. Ein entsprechend gekrümmtes Wurzelkanalinstrument kann in Bezug auf diese Orientierungsmarke im Handgriff festgelegt und dementsprechend das Instrument in den Zahnwurzelkanal eingeführt werden.

Wegen seines vergrößerten, insbesondere durch die Greifwulste bedingten Durchmessers bietet dieser Meßgriff auch einen wesentlich besseren Röntgenkontrast, vor allem dann, wenn die instrumentenseitige Stirnfläche des Handgriffes plan, also rechtwinklig zum Instrument ausgebildet ist. Das Instrument läßt sich in diesem Fall für Röntgenaufnahmen genau einstellen und danach die Einstelltiefe genau Kontrollieren.

Die Erfindung wird nachfolgend anhand eines Ausführungsbeispieles, das auch in der Zeichnung dargestellt ist, näher beschrieben. Es stellen dar:

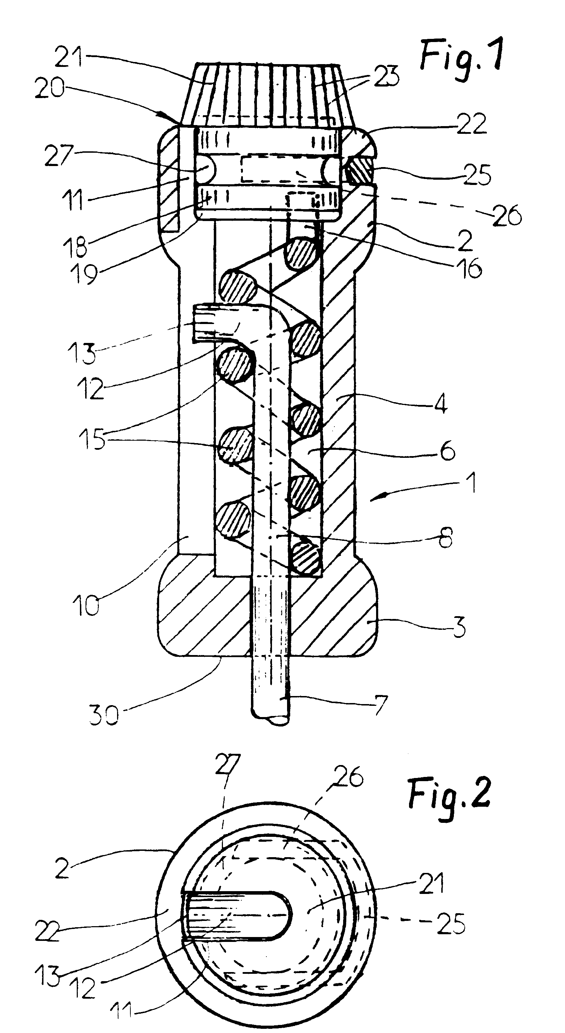

Fig. 1 einen Längsschnitt durch einen Meßgriff und

Fig. 2 eine Draufsicht hierzu.

Der dargestellte Meßgriff weist einen im wesentlichen zylindrischen Handgriff 1 mit einem oberen Greifwulst 2 und einem unteren Greifwulst 3 auf. Diese beiden Greifwulste sind gegenüber einem Mittelteil 4 im Durchmesser merklich vergrößert, so daß diese Greifwulste gute Anschläge für die Schub- und Zugbewegungen bei einem Behandlungseinsatz bilden. Im Innern des Handgriffes ist ein Zylinderhohlraum 6 ausgebildet, in den ein Behandlungsinstrument 7 mit seinem Schaft 8 hineinragt. Der Handgriff weist entlang einer Mantellinie einen Längsschlitz 10 auf, der nur auf der der Instrumentenspitze abgekehrten Griffseite durchgehend offen ist, das heißt durch eine Längsschlitz-Verlängerung 11 sich auch durch den oberen Greifwulst 2 erstreckt. Die Breite dieses Führungsschlitzes entspricht der Materialstärke des Instrumentenschaftes 8, der am freien Ende zu einem Führungshaken 12 umgebogen ist. Da dieser Führungshaken im Längsschlitz verschiebbar ist, kann das Instrument am oberen offenen Schlitzende auch aus dem Griff herausgezogen werden. Mit 13 ist das Ende des Führungshakens bezeichnet, der möglichst nicht aus dem Längsschlitz vorsteht. Im Inneren des Zylinderhohlraumes ist eine Schraubenwendel 15 drehbar untergebracht. Der Führungshaken 12 des Instrumentes durchgreift diese Wendel und wird bei deren Drehung daher auf- oder abwärts verschoben. Um dem Instrument eine gute Halterung und Führung zu geben, ist die Schraubenwendel 15 so ausgebildet, daß die Windungen den Instrumentenschaft und die übereinanderliegenden Wendelgänge den Hakenteil 12 satt umschließen. Auf diese Weise ist es möglich, das Instrument, weitgehend wackelfrei zu führen. Um die Wendel zu drehen, greift ein oberes Wendelemente 16 in einen Drehkörper 18 ein, der in einem zylindrischen Lagerraum 19 des oberen Greifwulstes 2 drehbar gelagert ist. Der Drehkörper bildet mit einem Drehknopf 21 zusammen einen Drehgriff 20. Der Drehknopf sitzt auf dem Greifwulstrand 22 auf, ist konisch gestaltet und mit Längsriffelungen 23 ausgestattet. Der Drehgriff ist mit seinem Drehkörper 18 mittels eines U-Bügels 25 aus Metall gegen Axialverschiebung fixiert. Seine Drehbarkeit gegenüber diesem in den Greifwulst eingesetzten U-Bügel wird durch seine in eine Ringnut 27 des Drehkörpers eingreifenden Schenkel 26 gewährleistet. Die konische Gestaltung des Drehknopfes 21 begünstigt insbesondere dann, wenn er mit Längsriffelungen 23 ausgestattet ist, ein griffsicheres Betätigen mit den Figurern. Dabei verhindert die zurückspringende Oberfläche dieses Drehknopfes ein unbeasichtigtes Verdrehen. Da während der Feilbewegungen mit dem Instrument der Meßgriff sowohl im Uhrzeigersinn wie auch entgegengesetzt gedreht wird, ist es wichtig, daß der Drehknopf nicht gelockert und damit die Fixierung auf die eingestellte Kanallänge unbewußt verändert wird. Auch durch diesen Drehknopf erstreckt sich die Längsschlitz-Verlängerung 11 zum Einsetzen und Herausnehmen des Instrumentes.

Beim dargestellten Meßgriff weist die Schraubenwendel 15 runden Querschnitt auf, wodurch die Reibungs- und Abnutzungsflächen zwischen Instrumentenschaft und Wendeloberfläche verkleinert werden. Um eine selbsthemmende Wirkung zwischen diesen beiden Organen zu erreichen, ist die Ganghöhe der Wendel entsprechend niedrig. Die Instrumentenverschiebung am Handgriff 1 zeigt das Ende 13 des Führungshakens an. Eine Meßskala, auch in Form einer Punktierung, kann außen am Handgriff angebracht sein. Es ist vorteilhaft, den Führungshaken so zu verkürzen, daß sein Ende 13 nicht über den Griffumfang vorsteht, sondern merklich unterhalb dieser Oberfläche zurückbleibt. Dadurch werden die Verschiebebewegungen des Instrumentes auch durch behandschuhte Finger nicht behindert, wie andererseits auch eine unbewußte Verschiebung des Hakens und damit des Instrumentes nicht ermöglicht wird. Ein verkürter Führungshaken kann auch die dünnen Handschuhe nicht mehr beschädigen.

Ein verbesserter Röntgenkontrast ergibt sich infolge des vergrößerten Meßgriffdurchmessers durch die Greifwulste, wenn die instrumentenseitige Stirnfläche des Handgriffes als plane Anschlagebene (30), die rechtwinklig zum Instrument verläuft, ausgebildet ist.

**Patentansprüche**

1. Meßgriff zur Behandlung von Zahnwurzelkanälen mit einem Handgriff (1), einem darin längsverstellbaren Instrument (7), einer in einem Zylinderhohlraum (6) dieses Handgriffes drehbar gelagerten Schraubenwendel (15) zum Übertragen der Verstellbewegung auf das Instrument (7), wozu ein Führungshaken (12) an seinem Schaftende in die Schraubenwendel eingreift, einem im Handgriff (1) vorgesehenen Längsschlitz (10) zur Längsführung des Instrumenten-Führungshakens, einem mit seinem Drehkörper in einer lagernut des freien Handgriffende drehbar gelagerten Drehgriff (20), der mit der Schraubenwendel (15) zum Übertragen der Drehbewegung in Verbindung steht und einer Längsschlitz-Verlängerung (11) durch den Drehgriff zum Einsetzen und Entnehmen des Instrumentes in und aus dem Handgriff,
<u>dadurch gekennzeichnet, daß</u>
der Handgriff (1) an seinem drehgriffseitigen Ende zu einem Greifwulst (2) erweitert ist, in dem ein zylindrischer Lagerraum (19) für einen Drehkörper (18) des Drehgriffes (20) ausgebildet ist, und die Längsschlitz-Verlängerung (11) durch den Drehgriff sich auch in den Greifwulst erstreckt, in dessen Bereich die Längsschlitz-Verlängerung nach außen abgedeckt ist.

2. Meßgriff nach Anspruch 1, dadurch gekennzeichnet, daß der Drehkörper (18) des Drehgriffes (20) im oberen Greifwulst (2) mittels eines mit seinen Schenkeln (26) in eine Ringnut (27) des Drehkörpers eingreifenden U-Bügels (25) gesichert ist.

3. Meßgriff nach Anspruch 1 oder 2, dadurch gekennzeichnet, daß der Drehgriff (20) einen an den Drehkörper (18) angeformten Drehknopf (21) aufweist, der auf dem Greifwulstrand (22) aufsitzt und sich nach außen hin konisch verjüngt.

4. Meßgriff nach einem der Ansprüche 1 bis 3, dadurch gekennzeichnet, daß der Handgriff (1) an seinem instrumentenseitigen Ende ebenfalls mit einem Greifwulst (3) ausgestattet ist.

5. Meßgriff nach einem der Ansprüche 1 bis 4, dadurch gekennzeichnet, daß der Längsschlitz (10) ein Greifschlitz ist, der als Orientierungshilfe beim Instrumenten-Einsatz dient.

6. Meßgriff nach einem der Ansprüche 1 bis 5, dadurch gekennzeichnet, daß der Handgriff (1) und/oder die Greifwulste (2, 3) mit Längsgrippen versehen sind.

7. Meßgriff nach einem der Ansprüche 1 bis 6, dadurch gekennzeichnet, daß der Drehknopf (21) des Drehgriffes (20) in Längsrichtung verlaufende Riffelungen (23) aufweist.

8. Meßgriff nach einem der Ansprüche 1 bis 7, dadurch gekennzeichnet, daß der Handgriff (1) mit seinen Greifwulsten (2,3) sowie auch der Drehgriff (20) aus Kunststoff geformten Formstücken bestehen.

9. Meßgriff nach Anspruch 8, dadurch gekennzeichnet, daß Handgriff (1) und Drehgriff (20) unterschiedlich gefärbte Oberflächen aufweisen.

10. Meßgriff nach einem der Ansprüche 1 bis 9, dadurch gekennzeichnet, daß der instrumentenseitige Greifwulst (3) eine zum eingespannten Instrument (7) rechtwinklige Anschlagebene (30) bildet.

## Claims

1. Measuring handle for treating dental root canals comprising a handle (1) a therein longitudinally adjustable instrument (7) a helical coil (15) rotatably supported in a cylindrical hollow space (6) of this handle for the transmission of the sliding motions to the instrument (7), for which purpose a guide hook (12) at its holder end engages in the helical coil, a longitudinal slot (10) provided in the handle (1) for the longitudinal guidance of the instrument's guide hook, a rotary handle (20) rotatably supported with his rotary body in a bearing groove at the free end of the handle, which is in connection with helical coil (15) for the transmission of rotation and a longitudinal-slot extension (11) through the rotary handle for the insertion and removal of instruments into and from the handle,

**characterized in that**
at the end of the rotary handle, the handle (1) is enlarged to form a gripping bead (2), wherein a cylindrical bearing space (19) for a rotary body (18) is formed, and the longitudinal-slot extension (11) extends through the rotary handle also to the gripping bead, in whose area the longitudinal-slot extension is covered towards the outside.

2. Measuring handle according to Claim 1, characterized in that the rotary body (18) of the rotary handle (20) is secured in the upper gripping bead (2) by means of a U-shaped bracket (25) engaging with its lugs (26) in an annular groove (27) of the rotary body.

3. Measuring handle according to Claim 1 or 2, characterized in that the rotary handle (20) has a knob (21) formed on the rotary body (18) and which sits on the gripping bead (22) and is conically tapered towards the outside.

4. Measuring handle according to one of the Claims 1 to 3, characterized in that the handle (1), at its end on the instrument side, is also provided with a gripping bead (3).

5. Measuring handle according to one of the Claims 1 to 4, characterized in that the longitudinal slot (10) is a gripping slot serving for orientation assistance when the instrument is inserted.

6. Measuring handle according to one of the Claims 1 to 5, characterized in that the handle (1) and/or the the gripping beads (2, 3) are provided with longitudinal ribs.

7. Measuring handle according to one of the Claims 1 to 6, characterized in that the knob (21) of the rotary handle (20) has a ribbing (23) running in longitudinal direction.

8. Measuring handle according to one of the Claims 1 to 7, characterized in that the handle (1) with its gripping beads (2, 3) as well as the rotary handle (20) consist of molded plastic parts.

9. Measuring handle according to Claim 8, characterized in that the handle (1) and the rotary handle (20) have differently colored surfaces.

10. Measuring handle according to one of the Claims 1 to 9, characterized in that the gripping bead (3) on

EP 0 410 983 B1

the instrument side forms an impact plane (30) which is at a right angle with respect to the inserted instrument (7).

## Revendications

1. Manche de mesure pour le traitement de canaux de racines dentaires, avec une poignée (1) proprement dite, un instrument (7) pouvant y être repositionné dans le sens de la longueur, un fil (15) en ressort hélicoïdal logé et pouvant tourner dans une cavité (6) cylindrique dudit manche pour transmettre le mouvement de repositionnement à l'instrument (7), ce pourquoi un crochet de guidage (12) à l'extrémité de sa tige vient en prise dans le fil en ressort hélicoïdal, une fente (10) longitudinale prévue dans le manche (1) pour grider dans le sens longitudinal le crochet de guidage de l'instrument, une poignée (20) rotative qui, logée pour pouvoir tourner avec son corps rotatif dans une rainure de montage de l'extrémité libre du manche, est reliée au fil (15) en ressort hélicoïdal pour transmettre le mouvement de rotation, et un prolongement (11) de la fente longitudinale à travers la poignée rotative pour engager et retirer l'instrument dans et hors du manche, caractérisé par le fait que
la poignée (1) est élargie à son extrémité côté poignée rotative en un bourrelet (2) de préhension dans lequel est ménagée une cavité (19) cylindrique formant un logement pour un corps (18) rotatif de la poignée (20) rotative, et que le prolongement (11) de la fente longitudinale à travers la poignée rotative s'étend également dans le bourrelet de préhension dans la zone duquel le prolongement de fente longitudinale est recouvert par rapport à l'extérieur.

2. Manche de mesure selon la revendication 1, caractérisé par le fait que le corps (18) rotatif de la poignée (20) rotative est assuré dans le bourrelet (2) de préhension du haut au moyen d'un étrier (25) en U venant en prise par ses branches (26) dans une rainure (27) annulaire du corps rotatif.

3. Manche de mesure selon la revendication 1 ou 2, caractérisé par le fait que la poignée (20) rotative présente un bouton (21) rotatif qui est moulé d'un seul tenant sur le corps (18) rotatif, prend assise sur le bord (22) du bourrelet de préhension et s'étend rétrécissant coniquement vers l'extérieur.

4. Manche de mesure selon l'une des revendications 1 à 3, caractérisé par le fait que sur son extrémité côté instrument, la poignée (1) est également pourvue d'un bourrelet (3) de préhension.

5. Manche de mesure selon l'une des revendications 1 à 4, caractérisé par le fait que la fente (10) longitudinale est une fente de palpage servant d'aide d'information lors de la mise en oeuvre des instruments.

6. Manche de mesure selon l'une des revendications 1 à 5, caractérisé par le fait que la poignée (1) et/ou les bourrelets (2, 3) de préhension sont munis de nervures longitudinales.

7. Manche de mesure selon l'une des revendications 1 à 6, caractérisé par le fait que le bouton (21) rotatif de la poignée (20) rotative présente des cannelures (23) s'étendant dans le sens longitudinal.

8. Manche de mesure selon l'une des revendications 1 à 7, caractérisé par le fait que la poignée (1) avec des bourrelets (2, 3) de préhension ainsi d'ailleurs que la poignée (20) rotative se composent de pièces moulées en matière plastique.

9. Manche de mesure selon la revendication 8, caractérisé par le fait que la poignée (1) et la poignée (20) rotative présentent une surface de coloration différente.

10. Manche de mesure selon l'une des revendications 1 à 9, caractérisé par le fait que le bourrelet (3) de préhension côté instrument forme un plan de butée (30) à angle droit par rapport à l'instrument (7) serré.

5

Fig.1

Fig.2